# EUROPEAN PATENT APPLICATION

(11) **EP 1 662 301 A1**
(43) Date of publication of application: **31.05.2006**
(21) Application number: 05026116.3
(22) Date of filing: 30.11.2005
(51) Int. Cl.: G02F 1/13357, G02F 1/1335

(54) **Lighting device and reflective liquid crystal display with the lighting device**

(30) Priority: 30.11.2004 JP 2004345903; 30.11.2004 JP 2004345904
(71) Applicant: SANYO ELECTRIC CO., LTD., Moriguchi-shi, Osaka-fu 570-8677 (JP)
(72) Inventor: Koma, Norio, Kitagata-cho Motosu-gun, Gifu 501-0456 (JP)
(74) Representative: Glawe, Delfs, Moll

(57) **Abstract**

A lighting device lighting a display surface of a reflective LCD (300) is disposed opposing to the display surface of the reflective LCD (300). This lighting device is formed by interposing an organic EL element layer (15) between transparent substrates (10, 20). The organic EL element layer (15) is formed of an anode (11), a cathode (12), and an organic layer (13). The cathode (12) is formed in a grid pattern, and a light shield layer (16) formed into the same grid pattern as that of the cathode (12) is formed over this cathode (12). It is preferable that a width of the light shield layer (16) is larger than a width of the patterned cathode (12) for enhancing a light shield effect.

## Description

### BACKGROUND OF THE INVENTION

### Field of the Invention:

The invention relates to a lighting device, for example, a lighting device that is usable as a front light of a reflective LCD. The invention also relates to a reflective liquid crystal display with such a lighting device.

### Description of the Related Art:

A liquid crystal display (hereafter, referred to as a LCD) is thin and consumes low power, and has been broadly used as a monitor of a computer or a monitor of a mobile data terminal such as a cellular phone. There are a transmissive LCD, a reflective LCD, and a semi-transmissive LCD as variations of LCDs. In the transmissive LCD, a transparent electrode is used as a pixel electrode for applying a voltage to a liquid crystal and a back light is set in the rear of the LCD, so that a bright display can be realized by controlling a transmission amount of light of this back light even in the dark. However, in an environment where external light is strong, such as an outdoor environment in daytime, a contrast can not be obtained enough.

The reflective LCD uses external light such as sunlight or interior light as a light source, and reflects the external light entering the LCD by a reflective pixel electrode formed of a reflective layer formed on a substrate on a viewer side. The reflective LCD makes a display by controlling an amount of light to bereflected from a LCD panel in each of the pixels, the light entering a liquid crystal and reflected by the reflective pixel electrode. Since this reflective LCD uses external light as a light source, there is a problem that the display can not be made in an environment of no external light.

The semi-transmissive LCD has both the transmissive function and the reflective function, and is applicable to both the bright and dark environments. However, since this semi-transmissive LCD has a transmissive region and a reflective region in a pixel, there is a problem of low display efficiency in each of the pixels.

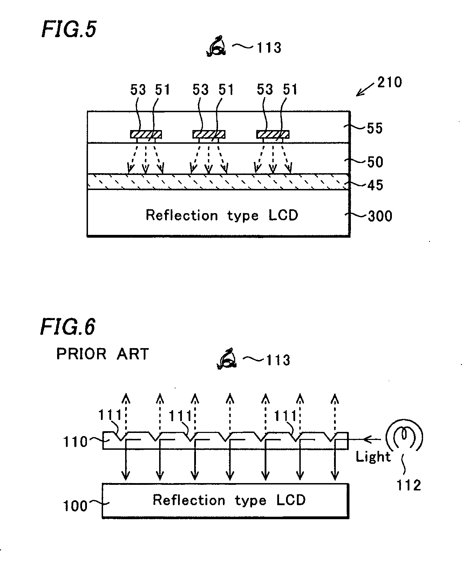

For solving this, it has been suggested that a front light is provided in the reflective LCD to realize a display even in the dark environment. Fig. 6 is a view showing the reflective LCD provided with the front light. A transparent acrylic plate 110 is disposed, opposing to a display surface of a reflective LCD 100. A plurality of grooves 111 shaped in inverted triangles is formed on a surface of this transparent acrylic plate 110, which is on the opposite side to the side opposing to the reflective LCD. Furthermore, a light source 112 is disposed on a side surface of the transparent acrylic plate 110. Light entering the transparent acrylic plate 110 from the light source 112 is refracted in a direction to the reflective LCD 100 by inclined surfaces of the grooves 111, and enters the display surface of the reflective LCD 100.

The transmissive LCD, the reflective LCD, and the semi-transmissive LCD are described in Japanese Patent Application Publication No. 2003-255375.

However, the light entering the transparent acrylic plate 110 from the light source 112 is refracted in a direction to a viewer 113 on the opposite side to the reflective LCD 100 by a small amount as well as in the direction to the reflective LCD 100 by the inclined surfaces of the grooves 111 provided in the transparent acrylic plate 110. Therefore, the small amount of light leaks from the transparent acrylic plate 110 to reach eyes of the viewer 113, causing a problem of degrading the contrast of the LCD display.

It is an object of this invention to provide a lighting device and a liquid crystal display that lessen this drawback.

### SUMMARY OF THE INVENTION

The solution according to the invention lies in the features of the independent claims and preferably in those of the dependent claims.

The invention provides a lighting device illuminating an object to be observed by a viewer. The device includes a transparent substrate, an array of a light-emitting body disposed on the transparent substrate. The light emitting body has a viewer-side face facing the viewer and an object-side face through which light generated by the light-emitting body reaches the object. The device also includes a light shield layer disposed on the viewer-side face.

The invention also provides a reflective liquid crystal display that includes a reflective display portion, a transparent substrate disposed on the reflective display portion, an array of a light-emitting body disposed on the transparent substrate, and a light shield layer disposed on the light-emitting body.

The invention further provides a liquid crystal display that includes a base substrate, a plurality of pixel electrodes arranged on the base substrate, a liquid crystal layer disposed on the pixel electrodes, a common electrode disposed on the liquid crystal layer, a first transparent substrate disposed on the common electrode, an electrode layer disposed on the first transparent substrate, a light emitting layer disposed on the first electrode layer, a patterned electrode layer disposed on the light emitting layer, a patterned light shield layer disposed on the patterned electrode layer, and a second transparent substrate disposed on the patterned light shield layer.

By virtue of the invention, light irradiated to the viewer side from the light emitting body is reflected toward or absorbed by the light shield layer. As a result, the amount of light from the light emissive region is minimized that directly enters eyes of a viewer watching the lighting device.

### BRIEF DESCRIPTION OF THE DRAWINGS

Fig. 1 is a cross-sectional view of a lighting device and a reflective LCD of a first embodiment of the invention.
Fig. 2 is a plan view of the reflective LCD provided with the lighting device of the first embodiment of the invention on the lighting device side.
Fig. 3 is an enlarged cross-sectional view of a portion of the lighting device of the first embodiment of the invention.
Fig. 4 is a plan view of a reflective LCD provided with a lighting device of a second embodiment of the invention on the lighting device side.
Fig. 5 is a cross-sectional view of the lighting device of the second embodiment of the invention.
Fig. 6 is a cross-sectional view of a reflective LCD provided with a lighting device of the conventional art.

### DETAILED DESCRIPTION OF THE INVENTION

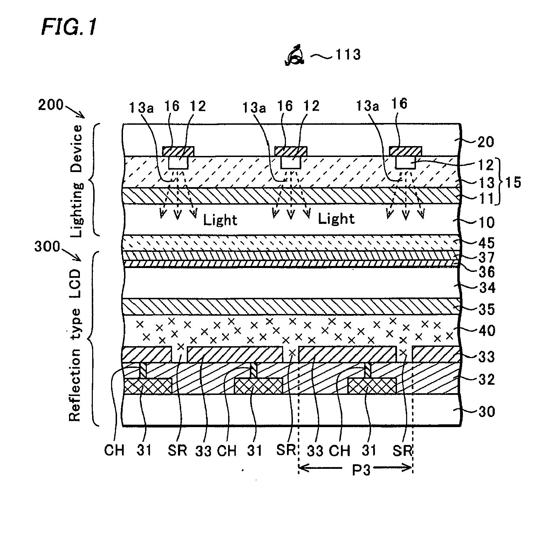

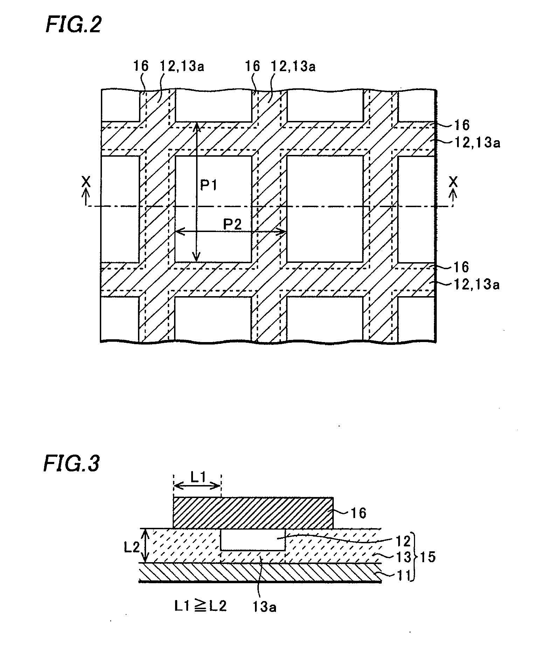

A lighting device and a reflective liquid crystal display of a first embodiment of the invention will be described with reference to figures. Fig. 2 is a plan view of a reflective LCD 300 provided with a lighting device 200, seen from the lighting device 200 side, and Fig. 1 is a cross-sectional view along line X-X of Fig. 2. In this embodiment, as shown in Fig. 1, the lighting device 200 is disposed above the reflective LCD 300, opposing to a display surface of the reflective LCD 300.

First, a structure of the lighting device 200 will be described. An organic electroluminescent element layer 15 (hereafter, referred to as an "organic EL element layer 15") is formed between a first transparent substrate 10 and a second transparent substrate 20 formed of a glass substrate or the like. The organic EL element layer 15 has an anode 11 formed of a transparent conductive material such as ITO (Indium Tin Oxide) or IZO (Indium Zinc Oxide) and formed on the substantially the whole surface of the first transparent substrate 10, an organic layer 13 formed on this anode 11, and a cathode 12 formed on the organic layer 13 and formed in a grid pattern with a predetermined pitch.

The organic layer 13 is formed of an electron transport layer, a light emissive layer, and a hole transport layer. The cathode 12 is formed of, for example, an aluminum layer (Al layer), a layered body of a magnesium layer (Mg layer) and a silver layer (Ag layer), or a calcium layer (Ca layer). It is preferable that a thickness of the anode 11 is 100 nm, a thickness of the cathode 12 is 500 nm, and a thickness of the organic layer 13 is 100 nm. It is noted that an inorganic EL element layer can be used instead of the organic EL element layer 15.

In the organic EL element layer 15, a part of the organic layer 13 vertically interposed between the anode 11 and the cathode 12 is to be a light emissive region 13a. That is, the organic layer 13 immediately under the cathode 12 serves as the light emissive region 13a, and this light emissive region 13a also forms the same grid pattern in its plan view as the grid pattern of the cathode 12. By applying a positive potential to the anode 11 and a negative potential to the cathode 12, the light emissive region 13a emits light.

The organic layer 13 in the other region does not emit light, serving as a non-emissive region. Furthermore, a light shield layer 16 is formed over the cathode 12 formed into a grid pattern. The light shield layer 16 is also formed into the same grid pattern as the grid pattern of the cathode 12. Since the light shield layer 16 is to shield light emitted upward from the light emissive region 13a, the light shield layer 16 is formed of a light reflective layer reflecting light or a light absorptive layer absorbing light. It is preferable that a thickness of the light shield layer 16 is 10 nm or less.

The light reflective layer is formed of, for example, an aluminum layer (Al layer). The light absorptive layer can be formed of a black pigment layer formed of a photoresist material containing a black pigment, a black dye layer formed of a photoresist material containing black dye, or a chromium oxide layer.

Light emitted downward from the light emissive region 13a is irradiated to the reflective LCD 300 through the transparent anode 11 and the first transparent substrate 10. Light irradiated upward from the light emissive region 13a is reflected downward or absorbed by the cathode 12 and the light shield layer 16, so that it is minimized that the light from the light emissive region 13a directly enters eyes of a viewer 113 watching downward from above the lighting device 200.

In the described structure, the cathode 12 is formed into a grid pattern with a predetermined pitch and the anode 11 is not patterned, but the cathode 12 and the anode 11 can be interchanged with each other. That is, in Fig. 1, the anode 11 can be disposed in the position of the cathode 12, and the cathode 12 can be disposed in the position of the anode 11. In this case, the anode 11 is patterned, and the cathode 12 is not patterned. Alternatively, it is possible that the anode 11 and the cathode 12 are formed on the whole surface without patterned at all, and instead at least one layer among three layers of the electron transport layer, the light emissive layer, and the hole transport layer forming the organic layer 13 is patterned. That is, a region formed with all the three layers serves as the light emissive region, and a region where any one of the three layers is absent serves as the non-emissive region.

Furthermore, it is preferable that a width of the light shield layer 16 is larger than a width of the patterned cathode 12 (or anode) for enhancing a light shield effect. As shown in Fig. 3, it is preferable that a length L1 between an edge of the patterned cathode 12 (or anode) and an edge of the light shield layer 16 is equal to or more than a sum L2 of the thickness of the light emissive region 13a of the organic layer 13 and the thickness of the patterned cathode 12 (or anode) for further enhancing the light shield effect.

Furthermore, it is preferable that the pitch of the grid pattern of the patterned cathode 12 (or anode) (lengths of P1 and P2 in Fig. 2) is 1 mm or less for preventing the viewer 113 from sensing a discomfort in the eyes.

Next, a structure of the reflective LCD 300 to be lighted by the described lighting device 200 and a connection relation of the reflective LCD 300 and the lighting device 200 will be described. A switching thin film transistor 31 (hereafter, referred to as a TFT) is formed in each of pixels on a TFT substrate 30 formed of a glass substrate. The TFTs 31 are covered with an interlayer insulation film 32, and pixel electrodes 33 formed of a reflective material such as aluminum (Al) are formed on the interlayer insulation film 32, corresponding to the TFTs 31 respectively. The pixel electrode 33 is connected to a drain or a source of the corresponding TFT 31 through a contact hole CH formed in the interlayer insulation film 32.

An opposing substrate 34 formed of a glass substrate is disposed, opposing to the TFT substrate 30 formed with the pixel electrodes 33. A common electrode 35 formed of ITO is formed on a front surface of the opposing substrate 34. A light scattering layer 36 formed of a diffusion adhesion layer and a deflection plate 37 are laminated on a back surface of the opposing substrate 34, in this order. The light scattering layer 36 is to scatter light from the lighting device 200 and equally irradiate the light to the pixel electrode 33. A liquid crystal layer 40 is enclosed between this opposing substrate 34 and the TFT substrate 30.

In the described structure, light irradiated from the lighting device 200 is deflected in a predetermined direction by the deflection plate 37, and enters the liquid crystal layer 40 through the light scattering layer 36, the opposing substrate 34, and the common electrode 35, and reflected by the pixel electrodes 33. The light reflected by the pixel electrodes 33 returns though the same route, and visually recognized by the viewer 113 through spaces of the light shield layer 16 formed in the grid pattern.

At this time, light transmittance changes among the pixels by an electric field applied between the pixel electrodes 33 and the common electrode 35. Therefore, intensity of light reflected by the pixel electrodes 33 changes among the pixels, so that the LCD display can be realized. As described above, since the light shield layer 16 is provided in the lighting device 200 and leakage of the light from the light emissive region 13a is minimized, the contrast of the LCD display can be enhanced.

It is preferable that the lighting device 200 is disposed above and adjacent to the reflective LCD 300. However, if an air layer exists between the lighting device 200 and the reflective LCD 300, light irradiated from the first transparent substrate 10 of the lighting device 200 is reflected when entering the air layer and returns to the viewer side, so that the contrast may be degraded.

Therefore, it is preferable to attach the lighting device 200 and the reflective LCD 300 with a resin layer 45 having the same refractive index as that of the first transparent substrate 10 (e.g. an UV curable resin layer or a visible light curable resin layer) therebetween, for preventing light reflection.

Next, a positional relation between the lighting device 200 and the pixels of the reflective LCD 300 will be described. In the reflective LCD 300, a plurality of pixels having the same size is arrayed in a row direction and a column direction with the same pitch. A pitch P3 of the pixels in the row direction (a pitch of the pixel electrodes 33) is shown in Fig. 1.

Each of the pixels has a TFT 31 and a pixel electrode 33. The pitch of the grid pattern of the cathode 12 and the light shield layer 16 of the lighting device 200 is the same as the pitch of the pixels. That is, the pitch P2 of the grid pattern in the row direction is the same as the pitch P3 of the pixels in the row direction, and the pitch P1 of the grid pattern in the column direction is the same as the pitch of the pixels in the column direction. In this case, it is preferable that the cathode 12 and the light shield layer 16 of the lighting device 200 is disposed immediately above a separating region SR of the pixel electrodes 33 which does not make the LCD display. This can provide an advantage that almost all the light reflected by the pixel electrodes 33 passes through the spaces of the grid pattern without shielded by the light shield layer 16 and visually recognized by the viewer 113.

Furthermore, the pitch of the grid pattern of the cathode 12 and the light shield layer 16 of the lighting device 200 (the pitch in the row and column directions) can be smaller than the pitch of the pixels (the pitch in the row and column directions), and a ratio of the pitch of the grid pattern to the pitch of the pixels (the pitch of the grid pattern divided by the pitch of the pixels) can be inverse of a natural number. An interference fringe or moiré occurs in the LCD display when the pitch of the grid pattern and the pitch of the pixels are the same, but the above setting can prevent these phenomena.

Furthermore, on the contrary, the pitch of the grid pattern of the cathode 12 and the light shield layer 16 of the lighting device 200 (the pitch in the row and column directions) can be larger than the pitch of the pixels (the pitch in the row and column directions), and the ratio of the pitch of the grid pattern to the pitch of the pixels (the pitch of the grid pattern divided by the pitch of the pixels) can be a natural number. This can also prevent the interference fringe or moiré occurring.

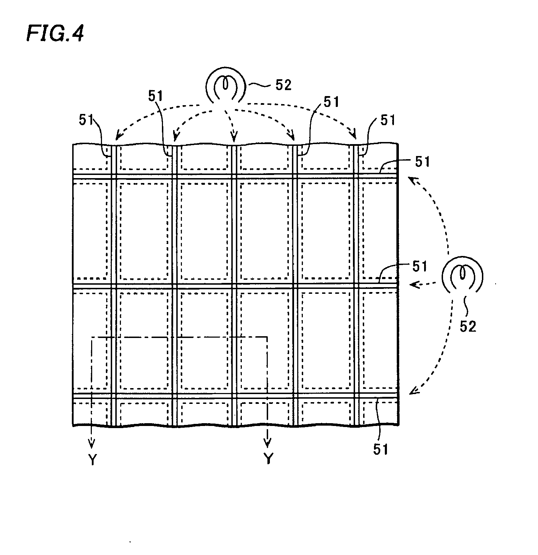

Next, a lighting device and a reflective liquid crystal display of a second embodiment of the invention will be described with reference to figures. Fig. 4 is a plan view of the reflective LCD 300 provided with a lighting device 210, on the lighting device 210 side, and Fig. 5 is a cross-sectional view along line Y-Y of Fig. 4. As shown in Fig. 5, in this embodiment, the lighting device 210 is disposed above the reflective LCD 300, opposing to the display surface of the reflective LCD 300. Description of the reflective LCD 300 as an object to be lighted will be omitted since it is the same as in the first embodiment.

Different from the first embodiment, this lighting device 210 uses a light leading thin plate 51 having a grid pattern and formed on the transparent substrate 50 such as a glass substrate as a light emissive thin body instead of the organic EL element 15, and a light source 52 supplying light to this light leading thin plate 51. The other structures are the same as in the first embodiment.

The light leading thin plate 51 is formed of transparent resin having a thickness of 1ìm and formed in a grid pattern. Light sources 52 are disposed on edges of the grid pattern in the row and column directions, and light emitted by the light sources 52 is supplied from these edges into the light leading thin plate 51 and irradiated to the outside of the light leading thin plate 51. Therefore, the light leading thin plate 51 serves as a light source formed in a grid pattern. A light shield layer 53 is attached on the surface of the light leading thin plate 51 on the viewer 113 side. It is possible that the light leading thin plate 51 attached with the light shield plate 53 is further covered with a sheet of transparent substrate 55.

Light emitted downward from the light leading thin plate 51 is irradiated to the reflective LCD 300 through the transparent substrate 50. Since light emitted upward from the light leading thin plate 51 is reflected downward or absorbed by the light shield layer 53, the light from the light leading thin plate 51 is not likely to enter directly eyes of the viewer 113 watching downward from above the lighting device 200.

## Claims

1. A lighting device illuminating an object to be observed by a viewer, comprising:
- a transparent substrate (20); an array of a light-emitting body disposed on the transparent substrate (20), the light emitting body comprising a viewer-side face facing the viewer and an object-side face through which light generated by the light-emitting body reaches the object; and a light shield layer (16) disposed on the viewer-side face.

2. The lighting device of claim 1, wherein the light-emitting body comprises an organic electroluminescent element (15).

3. The lighting device of claim 2, wherein the organic electroluminescent element (15) comprises an anode (11) and a cathode (12), and the anode (11) or the cathode (12) is patterned to form the array.

4. The lighting device of claim 3, wherein the array comprises a grid pattern.

5. The lighting device of claim 3 or 4, wherein the organic electroluminescent element (15) further comprises an organic layer (13) comprising an electron transport layer, a light emissive layer and a hole transport layer and disposed between the anode (11) and the cathode (12).

6. The lighting device according to any of claims 3 to 5, wherein the cathode (12) is patterned and located at the viewer-side face.

7. The lighting device according to any of claims 3 to 6, wherein the light shield layer (16) is disposed on the patterned cathode (12) or anode (11).

8. The lighting device of claim 7, wherein the light shield layer (16) comprises a light absorptive layer or a light reflective layer.

9. The lighting device of claim 7 or 8, wherein a width of the light shield layer (16) is larger than a width of the patterned cathode (12) or anode (11).

10. The lighting device of claim 9, wherein a distance between an edge of the patterned cathode (12) or anode (11) and an edge of the light shield layer (16) is larger than a sum of a thickness of a light emissive region of the organic layer (13) and a thickness of the patterned cathode (12) or anode (11).

11. The lighting device according to any of claims 4 to 10, wherein a pitch of the grid pattern is 1 mm or less.

12. The lighting device of claim 2, wherein the organic electroluminescent element (15) comprises an anode (11), a cathode (12) and a stack of an electron transport layer, a light emissive layer and a hole transport layer that is disposed between the anode (11) and the cathode (12), and the electron transport layer, the light emissive layer or the hole transport layer is patterned to form the array.

13. The lighting device of claim 1, wherein the light-emitting body comprises a light leading thin plate (51) that is patterned as a grid and receives light from a light source.

14. The lighting device of claim 1, wherein the light-emitting body comprises an inorganic electroluminescent element.

15. A reflective liquid crystal display comprising:
- a reflective display portion (300);
- a transparent substrate (10) disposed on the reflective display portion (300);
- an array of a light-emitting body disposed on the transparent substrate (10); and
- a light shield layer (16) disposed on the light-emitting body.

16. The reflective liquid crystal display of claim 15, wherein the light-emitting body comprises an organic electroluminescent element (15).

17. The reflective liquid crystal display of claim 16, wherein the organic electroluminescent element (15) comprises an anode (11) and a cathode (12), and the anode (11) or the cathode (12) is patterned to form the array.

18. The reflective liquid crystal display of claim 17, wherein the array comprises a grid pattern.

19. The reflective liquid crystal display of claim 17 or 18, wherein the organic electroluminescent element (15) further comprises an organic layer (13) comprising an electron transport layer, a light emissive layer and a hole transport layer and disposed between the anode (11) and the cathode (12).

20. The reflective liquid crystal display according to any of claims 17 to 19, wherein the cathode (12) is patterned and in contact with the light shield layer (16) .

21. The reflective liquid crystal display according to any of claims 17 to 20, wherein the light shield layer (16) is disposed on the patterned cathode (12) or anode (11).

22. The reflective liquid crystal display of claim 21, wherein the light shield layer (16) comprises a light absorptive layer or a light reflective layer.

23. The reflective liquid crystal display of claim 21 or 22, wherein a width of the light shield layer (16) is larger than a width of the patterned cathode (12) or anode (11).

24. The reflective liquid crystal display of claim 23, wherein a distance between an edge of the patterned cathode (12) or anode (11) and an edge of the light shield layer (16) is larger than a sum of a thickness of a light emissive region of the organic layer and a thickness of the patterned cathode (12) or anode (11).

25. The reflective liquid crystal display according to any of claims 18 to 24, wherein a pitch of the grid pattern is 1 mm or less.

26. The reflective liquid crystal display of claim 16, wherein the organic electroluminescent element (15) comprises an anode (11), a cathode (12) and a stack of an electron transport layer, a light emissive layer and a hole transport layer that is disposed between the anode (11) and the cathode (12), and the electron transport layer, the light emissive layer or the hole transport layer is patterned to form the array.

27. The reflective liquid crystal display of claim 15, wherein the light-emitting body comprises a light leading thin plate (51) that has a grid pattern and receives light from a light source.

28. The reflective liquid crystal display of claim 15, wherein the light-emitting body comprises an inorganic electroluminescent element.

29. The reflective liquid crystal display of claim 18 or 27, wherein a pitch of the grid pattern is equal to a pitch of pixels of the reflective display portion.

30. The reflective liquid crystal display of claim 18 or 27, wherein a pitch of the grid pattern is equal to a pitch of pixels of the reflective display portion divided by a natural number.

31. The reflective liquid crystal display of claim 18 or 27, wherein a pitch of the grid pattern is equal to a pitch of pixels of the reflective display portion multiplied by a natural number.

32. The reflective liquid crystal display of claim 15, wherein the reflective display portion comprises a light scattering layer (36)

33. The reflective liquid crystal display of claim 32, wherein the reflective display portion further comprises a deflection plate (37) disposed on the light scattering layer (36).

34. A liquid crystal display comprising:
- a base substrate (30);
- a plurality of pixel electrodes (33) arranged on the base substrate (30);
- a liquid crystal layer (40) disposed on the pixel electrodes (33);
- a common electrode (35) disposed on the liquid crystal layer (40);
- a first transparent substrate (34) disposed on the common electrode (35);
- an electrode layer (11) disposed on the first transparent substrate (34);
- a light emitting layer disposed on the first electrode layer (11);
- a patterned electrode (12) layer disposed on the light emitting layer;
- a patterned light shield layer (16) disposed on the patterned electrode layer (12); and
- a second transparent substrate (20) disposed on the patterned light shield layer (16).
